(19) Europäisches Patentamt
European Patent Office
Office européen des brevets

(11) **EP 2 695 321 B1**

(12) **EUROPÄISCHE PATENTSCHRIFT**

(45) Veröffentlichungstag und Bekanntmachung des Hinweises auf die Patenterteilung:
**24.12.2014  Patentblatt 2014/52**

(21) Anmeldenummer: **12716312.9**

(22) Anmeldetag: **05.04.2012**

(51) Int Cl.:
**H04L 1/08** *(2006.01)*

(86) Internationale Anmeldenummer:
**PCT/EP2012/056381**

(87) Internationale Veröffentlichungsnummer:
**WO 2012/136827 (11.10.2012 Gazette 2012/41)**

(54) **VERFAHREN FÜR EINEN SENDER FÜR EIN MEHRKANAL-KOMMUNIKATIONSSYSTEM ZUR VERSENDUNG VON ECHTZEIT-DATEN**

METHOD FOR A TRANSMITTER IN A MULTI-CHANNEL COMMUNICATION SYSTEM FOR TRANSMITTING REAL-TIME DATA

PROCEDE POUR UN ÉMETTEUR DANS UN SYSTÈME DE COMMUNICATION À MULTIPLE CANAUX POUR ÉMETTRE DES DONNÉES EN TEMPS RÉEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2011   DE 102011001911**

(43) Veröffentlichungstag der Anmeldung:
**12.02.2014   Patentblatt 2014/07**

(73) Patentinhaber: **RWTH Aachen**
**52062 Aachen (DE)**

(72) Erfinder:
• **DOMBROWSKI, Christian**
**52134 Herzogenrath (DE)**
• **GROSS, James**
**Stockholm, 11425 (SE)**

(74) Vertreter: **Schmelcher, Thilo et al**
**RCD-Patent**
**Postfach 3106**
**52118 Herzogenrath (DE)**

(56) Entgegenhaltungen:
**US-A1- 2006 008 031**

• **MESQUITA A R ET AL: "Redundant data transmission in control/estimation over wireless networks", AMERICAN CONTROL CONFERENCE, 2009. ACC '09, IEEE, PISCATAWAY, NJ, USA, 10. Juni 2009 (2009-06-10), Seiten 3378-3383, XP031487137, ISBN: 978-1-4244-4523-3**
• **WILLIG A: "Antenna redundancy for increasing transmission reliability in wireless industrial lans", EMERGING TECHNOLOGIES AND FACTORY AUTOMATION, 2003. PROCEEDINGS. ETFA '03. IEEE CONFERENCE SEPT. 16-19, 2003, PISCATAWAY, NJ, USA,IEEE, Bd. 1, 16. September 2003 (2003-09-16), Seiten 7-14, XP010670404, DOI: 10.1109/ETFA.2003.1247681 ISBN: 978-0-7803-7937-4**

**Beschreibung**

Die Erfindung betrifft ein Verfahren für einen Sender für ein Mehrkanal-Kommunikationssystem zur Versendung Echtzeit-sensitiver Daten D.

Echtzeit sensitive Datenübertragung ist im Wesentlichen durch zwei Parameter beschreibbar. Zum einen müssen die Daten vollständig vom Empfänger empfangen sein, zum anderen müssen die Daten auch innerhalb einer vorbestimmten Zeit empfangen sein.

Dabei kann man zwischen sogenannten Soft Real-time Kommunikation und Hard Real-time Kommunikation unterscheiden.

Unter Soft Real-time Kommunikation wird beispielsweise Videodatenübertragung und/oder Audiodatenübertragung verstanden.

Im Unterschied zur Soft Real-time Kommunikation wird bei der Hard Real-time Kommunikation im Allgemeinen auf drahtgebundene Systeme zurückgegriffen, insbesondere dann, wenn die Anforderungen an die Ausfallwahrscheinlichkeit für zu übertragende Daten bezogen auf eine gegebene Zeitspanne groß sind, d.h. die Ausfallwahrscheinlichkeit sehr klein ist.

So sind beispielsweise im Bereich der Industrieautomation die Ausfallwahrscheinlichkeitsanforderungen für Steuerdaten so, dass diese im Bereich von $10^{-6}$ bis $10^{-10}$ liegen. In diesem Bereich wird zudem eine Übertragung innerhalb von wenigen Millisekunden bis hinunter zu 100 Mikrosekunden gefordert. Dabei ist festzustellen, dass die tatsächliche Nutzlastgröße der zu versendenden Daten eher gering ist und häufig nur 100 byte oder weniger beträgt.

Um diesen Anforderungen zu genügen wurden Kommunikationssysteme auf Basis von optischer Datenübertragung eingesetzt, um die besonders hohen Anforderungen an die Ausfahlwahrscheinlichkeit bezogen auf die zur Verfügung stehende Zeitspanne zu erfüllen.

Dieser Ansatz ist jedoch nachteilig, da die drahtgebundene Übertragung unflexibel ist und bei einem Umbau von Anlagenteilen in aller Regel hohe Kosten für die erneute Installation verursachen. Zudem zeigt es sich immer wieder, dass drahtgebundene Systeme bei Baumaßnahmen immer wieder beschädigt werden, so dass es zu einem Stillstand der Anlage kommt.

Der Einsatz drahtloser Systeme wurde zwar vereinzelt vorgeschlagen, allerdings konnte bisher keine Lösung vorgelegt werden, die das wichtigste Problem drahtloser Systeme auch im Hinblick auf die Anforderungen Echtzeit-sensitiver Daten löst.

Das wichtigste Problem ist dabei, dass der drahtlose Kommunikationskanal so gestaltet sein muss, dass die stochastischen Eigenschaften des drahtlosen Kommunikationskanals ohne Folgen bleiben.

Dabei ist zu berücksichtigen, dass die Qualität eines drahtlosen Kommunikationskanals innerhalb kurzer Zeit stark variieren kann. Dies kann z.B. durch Rauschquellen "begünstigt" sein, oder aber durch bewegliche Metallteile, welche Reflektionen verursachen und somit Auslöschungen begünstigen können.

Insbesondere im Bereich der Industrieautomation sind derlei Störquellen, die zu massivem Fading des Signals beitragen können, bekannt.

Auch in anderen Bereichen, wie z.B. der Automobilindustrie, wird zunehmend versucht, drahtlose Übertragung einzusetzen, um so den Aufwand für die Erstellung von Kabelbäumen zu minimieren und gleichzeitig Gewicht zu sparen.

Auch hier können im Wesentlichen dieselben Aussagen wie zuvor für die Industrieautomation getätigt werden.

Obwohl es erste Ansätze gibt drahtlose Kommunikation auch in diesem Bereich nutzbar zu machen, sind die bisherigen Ansätze nicht für Echtzeitkommunikationsanforderungen im Sinne einer Hard Real-Time Kommunikation geeignet.

Dies ist zum einen darin begründet, dass die generelle Fähigkeit Fluktuationen des Drahtlosen Kanals verarbeiten zu können, nicht notwendigerweise bedeutet, dass die hierzu verwendeten Maßnahmen auch geeignet sind, Fluktuationen im Bereich der (harten) Echtzeit-Kommunikation wirksam begegnen zu können.

So können hochentwickelte Fehlerkorrekturkodierungen wegen der stark limitierten Übertragungszeit nicht verwendet werden, da diese sowohl bei der Kodierung als auch bei der Dekodierung sehr zeitintensiv sind. Lediglich durch besondere, kostenträchtige Hardware wäre hier an einen Einsatz denkbar.

Weiterhin können Übertragungstechniken, die auf instantane Kanalstatusinformation basieren, nicht verwendet werden, da in aller Regel keine Zeit für eine Kanalakquisition zur Verfügung steht.

Auch für eine erneute Versendung (retransmission) bleibt in aller Regel keine Zeit, da diese erneute Versendung eine aktive Rückmeldung seitens des Empfängers über eine fehlerhaft erhaltene Nachricht erfordert und auch die hierdurch angeforderte erneute Versendung noch innerhalb der gegebenen Zeit erfolgen muss.

Aus der US 2006/008031 A1 ist es bekannt, zur Versendung bestimmte Daten in Fragmente aufzuteilen, um diese zumindest zweimal über verschiedene MIMO-Teilkanäle zu übertragen. Die Teilkanäle sind hierbei durch unterschiedliche Antennen, Sendefrequenzen sowie Übertragungszeitschlitze definiert und werden als statistisch unabhängig angenommen.

Mesquita et al: "Redundant data transmission in control/estimation over wireless networks", American Control Conference, IEEE, Seiten 3378-3383, ISBN: 978-1-4244-4523-3, veröffentlicht am 10.6.2009, lehrt die redundante Versendung gleicher Daten in drahtlosen Sensornetzwerken. Die benötigte Redundanz wird hierbei abhängig gemacht von der Anzahl der zuvor aufeinandergefolgten Übertragungs-fehlversuche.

Willig: "Antenna redundancy for increasing transmission reliability in wireless industrial LANs", Emerging Technologies and Factory Automation, IEEE, Bd. 1, Seiten 7-14, DOI: 10.1109/ETFA.2003.1247681, ISBN: 978-0-7803-7937-4, veröffentlicht am 16.9.2003, offenbart die Übertragung von Daten in einem drahtlosen, für die Verwendung in industriellen Anlagen bestimmten LAN. Hierbei werden die gleichen Daten nach jeder fehlgeschlagenen Übertragung erneut über einen anderen Kanal übertragen. Die Kanäle werden dabei als voneinander statistisch unabhängig angenommenen.

Die Erfindung hat sich als eine Aufgabe gestellt, ein Verfahren und eine Vorrichtung bereitzustellen, die eines oder mehrere Probleme aus dem Stand der Technik in erfinderischer Weise löst.

Die Aufgabe wird gelöst durch ein Verfahren bzw. eine Vorrichtung gemäß den unabhängigen Ansprüchen. Weitere erfindungsgemäße Ausgestaltungen sind Gegenstand der abhängigen Ansprüche. Darüber hinaus beschreibt die nachfolgende ausführliche Beschreibung auch weitere Ausführungsformen der Erfindung.

Nachfolgend wird die Erfindung an Hand von Figuren näher erläutert, dabei zeigt

Figur 1 schematisch Daten D, welche in Fragmente a..h unterteilt sind,

Figur 2 eine Variante zur Versendung von Daten D,

Figur 3 eine weitere Variante zur Versendung von Daten D

Figur 4 eine erste Verteilung von Fragmenten gemäß einer Ausführungsform der Erfindung,

Figur 5 eine zweite Verteilung von Fragmenten gemäß einer Ausführungsform der Erfindung,

Figur 6 eine dritte Verteilung von Fragmenten gemäß einer Ausführungsform der Erfindung,

Figur 7 eine vierte Verteilung von Fragmenten gemäß einer Ausführungsform der Erfindung,

Figur 8 eine mögliche Verschränkung von Fragmenten gemäß einer Ausführungsform der Erfindung,

Figur 9 eine möglich nicht ganzzahlige Redundanz eines Fragmentes gemäß einer Ausführungsform der Erfindung,

Figur 10 eine mögliche Sicherung eines Fragmentes gemäß einer Ausführungsform der Erfindung,

Figur 11 eine weitere mögliche Sicherung von Fragmenten gemäß einer Ausführungsform der Erfindung, und

Figur 12 eine numerisch bestimmte Auswertung von Ausfallwahrscheinlichkeiten für eine Vielzahl von Redundanzen bei gegebenen Verzögerungen und Nachrichtengrößen.

Die Erfindung macht sich Eigenschaften neuer Kommunikationssysteme zu Nutzen.

So verwenden eine Vielzahl von Kommunikationssystemen im drahtlosen (WiMax, WLAN,UMTS, LTE, DVB-T) als auch drahtgebundenen (DMT, DSL, Powerline) Bereich mehrere Träger gleichzeitig, d.h. die Verwendung unterschiedlicher Frequenzen. Diese Technik wird ganz allgemein als Frequency Division Multiplex (FDM) bezeichnet

Eine spezielle Ausführungsform dieser Technik ist beispielsweise OFDM.

Diese Träger bilden dabei n Teilkanäle unterschiedlicher Frequenz.

Andere Technologien verwenden die parallele Aussendung in sogenannten Multiple-Input Systemen (MIMO-System oder MISO-System), d.h. die Verwendung mehrerer räumlich getrennter Übertragungswege vom Sender zum Empfänger.

Diese Übertragungswege bilden dabei n räumlich unterschiedliche Teilkanäle.

Kombinationen beider Technologien sind auch im drahtlosen Bereich (WiMax, LTE, IEEE 802.11 oder IEEE 802.15) anzutreffen.

Jede der Technologien alleine ermöglicht es schon die Bandbreite der Systeme erheblich zu erhöhen.

Im Bereich der Automatisierungstechnik als ein Beispiel für einen möglichen Einsatz in einer Echtzeit Umgebung, sind die Nachrichtengrößen im allgemeinen gering im Vergleich zu der möglichen Größe eines typischen zu übertragenden IP Pakets als Beispiel für eine Datenübertragung. D.h. die Bandbreite stellt im Zusammenhang nicht ein limitierender Faktor dar.

Da die zu erwartende Nachrichtengröße im Bereich der Echtzeitkommunikation eher gering ist, können die jeweilige Daten D über eine Anzahl von Teilkanälen in diesen Kommunikationssystemen gleichzeitig und redundant gesendet werden, ohne dass dabei das anzulegende Zeitkriterium verletzt wird.

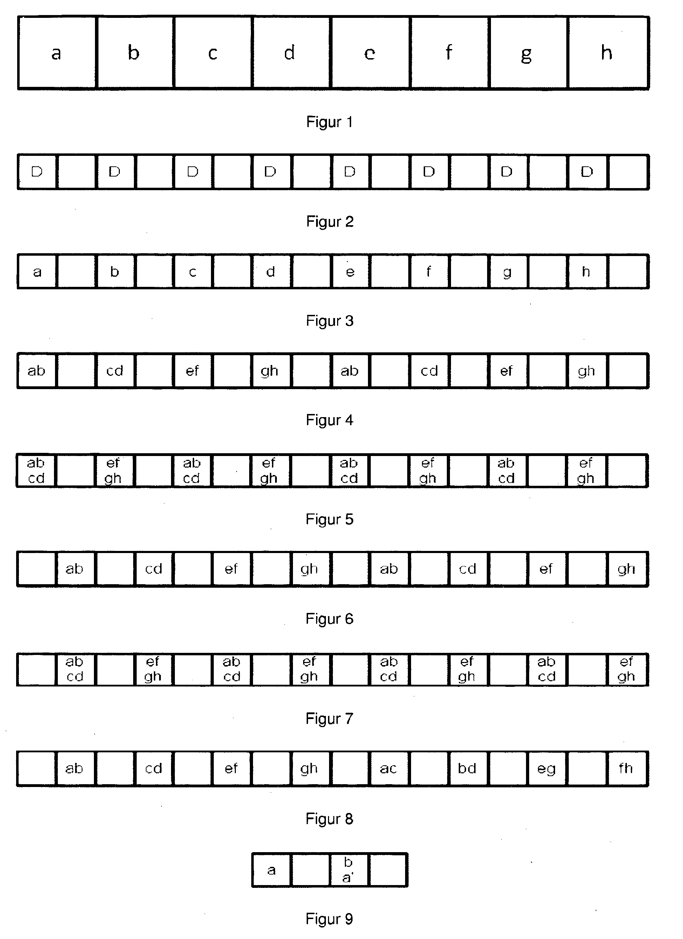

Eine solche Vorgehensweise ist in Figur 2 dargestellt, in der über 8 von 16 Kanälen die Daten D versandt werden, dabei stellt jedes der Kästchen symbolisch einen Teilkanal dar.

Die zu übertragenden Daten D können beispielsweise auch in l=8 Fragmente a,b,c,d,e,f,g,h unterteilt werden, siehe Figur 1.

Nun könnten diese Fragmente a,b,c,d,e,f,g,h der Daten D wie in Figur 3 dargestellt jedes für sich über einen der n Teilkanäle gesendet werden.

Obwohl diese Fragmente als gleichgroß dargestellt sind, muss dies nicht so sein. So kann es z.B. sein, dass die Daten D sich nicht in gleich große Fragmente zerlegen lässt. Dann kann beispielsweise das letzte Fragment mit Leerzeichen, z.B. "0" aufgefüllt werden.

Natürlich können auch andere Anzahlen für die Fragmente verwendet werden.

In beiden in Figur 2 und 3 dargestellten Fällen könnten die Daten D übertragen werden.

Im Fall der Figur 3 müssten alle Nachrichten korrekt empfangen werden. Dies könnte z.B. durch eine geringere Datenrate erzielt werden. In diesem Fall gibt es keine Redundanz.

Im Fall der Figur 2 sind die Daten D mehrfach redundant, d.h. es muss lediglich eine Nachricht empfangen werden. Bei dieser Form muss im Vergleich zu Figur 3 eine erheblich höhere Datenrate gewählt werden, wenn das Zeitkriterium noch erfüllt werden soll.

Die Erfindung betrifft nun nicht nur einen Kompromiss dieser beiden Extreme sondern zeigt auch auf, dass mit einer gewissen Redundanz gemäß einem Redundanzfaktor r die Ausfallwahrscheinlichkeit gegenüber beiden Fällen verbessert werden kann, d.h. im Prinzip sogar eine optimale Redundanz gefunden werden kann.

Beispiele solcher Fälle sind in den Figuren 4 bis 9 dargestellt.

Dazu werden die Fragmente a,b,c,d,e,f,g,h nun auf eine Menge von Teilkanälen verteilt.

Diese Verteilung findet statt auf Basis statistisch unabhängiger Teilkanäle.

Hierzu erhält das System entsprechende Information, welche m Kanäle statistisch voneinander unabhängig sind. Eine Abschätzung für statistische Unabhängigkeit kann beispielsweise aus einem Delay spread (rms) abgeleitet werden.

Die Anzahl statistisch unabhängiger Kanäle m ist größer als 1 und im Allgemeinen kleiner als die Gesamtzahl von Teilkanälen n kann aber auch mit dieser zusammenfallen.

Weiterhin basiert die Verteilung auf einer Information über den Kanalzustand der n Teilkanäle. Hier ist im Wesentlichen das durchschnittliche Signal/Rauschverhältnis (SNR) für den Gesamtkanal von Interesse.

Diese Information kann auch im laufenden Betrieb vom Empfänger zurückgemeldet werden, oder aber vom Sender bei Empfang von Bestätigungsmeldungen über einen oder mehrere der Teilkanäle n selbst ermittelt werden.

Diese Information kann auch initial bei einem Aushandeln von Verbindungsparametern ermittelt werden, d.h. bei Einrichtung der Verbindung, und dann im laufenden Betrieb überwacht werden.

Im Beispiel der Figur 4 werden nun die Fragmente a,b,c,d,e,f,g,h auf m=8 der n=16 Teilkanäle verteilt. Diese 8 Teilkanäle sind gemäß erhaltener Information statistisch unabhängig.

Dabei sind in der Figur 4 nun jedem dieser m=8 statistisch unabhängigen Kanäle 2 vollständige Fragmente zugeteilt, so dass jedes Fragment 2-mal mittels aller Nachrichten über die m Teilkanäle übertragen wird. Insofern ist der Grad der Redundanz r=2.

Im Beispiel der Figur 5 werden nun die Fragmente a,b,c,d,e,f,g,h auf m=8 der n=16 Teilkanäle verteilt. Diese 8 Teilkanäle sind gemäß erhaltener Information statistisch unabhängig.

Dabei sind in der Figur 5 nun jedem dieser m=8 statistisch unabhängigen Kanäle 4 vollständige Fragmente zugeteilt, so dass jedes Fragment 4-mal mittels aller Nachrichten über die m Teilkanäle übertragen wird. Insofern ist der Grad der Redundanz r=4.

Es versteht sich von selbst, dass die Anzahl statistisch unabhängiger Kanäle nur eine Obergrenze darstellt und nicht jeder statistisch unabhängige Kanal genutzt werden muss.

Dabei muss die Verteilung der Fragmente wie in Figur 8 dargestellt auch nicht notwendigerweise so sein, dass die mittels der einzelnen Teilkanäle transportierten Nachrichten redundant sind, sondern wie in Figur 8 dargestellt können die Fragmente auch permutiert sein und so eine Verschränkung aufweisen.

Obwohl bisher nur ganze Fragmente als Redundanz dargestellt sind, kann es im Prinzip schon ausreichend sein, eine Teilredundanz zu haben. Dieser Fall ist in Figur 9 dargestellt.

Dort wird vom Fragmente a ein Teil an Fragment b in einer Nachricht über einen zweiten Teilkanal beigefügt. In diesem Fall ist die Redundanz natürlich nicht mehr ganzzahlig, sondern eine reelle Zahl.

Mit anderen Worten der Grad der Redundanz r wird auf Basis der Anzahl der vorhandenen statistisch unabhängigen Teilkanäle m und der Größe der zu versendenden Daten D bzw. der Fragment-Anzahl bestimmt.

Diese Art der Übertragungsweise kann als "Entangled Packet Repetition" bezeichnet werden.

Bei entsprechender Auslegung ist es sogar denkbar eine Forward Error Correction (FEC) vorzusehen, d.h.

eine Codierung der zu versendenden Nachrichten mit Redundanz, so dass ein Empfänger aufgetretene Fehler wieder korrigieren kann. Als Beispiele solcher Codierung seien Reed-Solomon, Block-Codes oder Hamming-Codes exemplarisch angeführt.

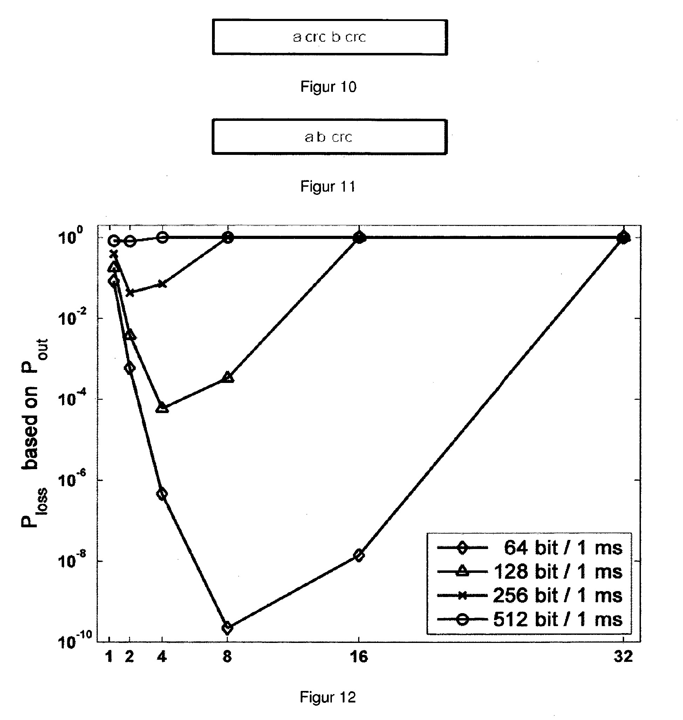

Andererseits können auch einfachere Sicherungsmaßnahmen alternativ oder zusätzlich vorgesehen sein, die lediglich eine Sicherung in Rückwärtsrichtung darstellen. So kann z.B. eine Prüfsumme CRC vorgesehen sein, die wie in Figur 10 dargestellt einzelne Fragmente a, b sichert oder aber wie in Figur 11 dargestellt mehrere Fragmente a,b, zusammen sichert.

Es versteht sich ohne weiteres, dass diese zwei Arten von Prüfsummen auch kombiniert verwendet werden können.

Eine solche CRC kann dann vom Empfänger dazu verwendet werden fehlerhafte Fragmente zu verwerfen und durch andere, fehlerfrei (Redundant) erhaltene Fragmente zu ersetzen, und im schlimmsten Fall die erneute Versendung anzufordern, soweit dies ein Zeitkriterium noch zulässt.

Weiterhin kann wie in Figuren 6 und 7 im Unterschied zu den Figuren 4 und 5 dargestellt auch vorgesehen sein, dass über eine alternative Teilmenge von statistisch unabhängigen Teilkanälen die Nachricht nochmals versandt wird, soweit dies ein Zeitkriterium (maximale Verzögerung) noch zulässt.

Durch die Erfindung wird es insbesondere ermöglicht für Daten D geringer Größe, z.B. bevorzugt von weniger als 1200 byte, besonders bevorzugt von 100 byte, bei einer Ausfahlwahrscheinlichkeit kleiner als $10^{-6}$ versenden zu können.

Obwohl das vorgestellte erfinderische Verfahren nicht auf Echtzeitkommunikation beschränkt ist, kann es insbesondere im Bereich der harten Echtzeitkommunikation seine Qualität beweisen.

Hierzu wird zur Bestimmung von r auch die maximale zulässige Verzögerung der zu versendenden Daten berücksichtigt. Dabei kann die maximale zulässige Verzögerung fest eingestellt sein oder aber von Zeit zu Zeit unterschiedlich sein.

Zur Berechnung des Redundanzfaktors r kann auf eine Look-up-table und/oder auf eine Berechnung zurückgegriffen werden. Ausschlaggebend hierfür können die Möglichkeiten des Senders sein, ob eine Berechnung innerhalb einer vorgegebenen Zeitspanne möglich ist oder nicht.

In aller Regel wird eine Neubestimmung des Redundanzfaktors notwendig sein, wenn die Kanalbedingungen (durchschnittliches Signal/Rauschverhältnis SNR) größeren Änderungen unterlag, oder aber wenn sich die Anzahl der statistisch unabhängigen Kanäle verändert, bzw. wenn die Datengröße D stärker variiert.

So kann z.B. der Sender eine Rückmeldung seitens des Empfängers nach erfolgter Versendung der Nachrichten erhalten, welche Informationen über den Kanalzustand der n Teilkanäle und/oder der o ausgewählten Teilkanäle enthält. Diese Rückmeldung muss dabei nicht notwendigerweise über denselben Weg, also das gleiche Kommunikationsmedium gesendet werden, sondern kann auch über ein anderes Kommunikationsmedium versandt werden. Solche Verfahren sind z.B. aus der Datenübertragung über Satellit bekannt, bei denen der Rückkanal über eine Modemleitung realisiert wird.

Wie bereits zuvor beschrieben kann jegliche Form der Verschränkung vorgesehen sein, z.B. auch eine Weikodierung (siehe z.B. US Patent 4,713,817) unterschiedlicher Teilkanäle.

Damit der Empfänger die Daten auch korrekt dekodieren kann muss der Empfänger Information erhalten wie die Daten aufgeteilt sind. Hierzu kann beispielsweise eine entsprechende Information in einen Header einer Nachricht eingebaut werden, die angibt, welcher Art der Redundanzgrad ist.

Dann kann der Empfänger auf Basis dieser Information die Fragmente erkennen und die Daten D wieder zusammen setzen.

Alternativ kann diese Information auch über einen getrennten Kontrollkanal ausgetauscht werden, z.B. vor der Versendung der Daten D.

Obwohl zuvor die Erfindung im Wesentlichen als Verfahren dargestellt wurde ist jedoch für den Fachmann ersichtlich, dass dieses Verfahren z.B. besonders sinnvoll in einem Software Defined Radio eingesetzt werden kann.

In Figur 12 ist die Ausfahlwahrscheinlichkeit $P_{loss}$ bezogen auf $P_{out}$ dargestellt, wobei auf der Ordinate der Redundanzfaktor r aufgetragen ist.

Dabei ist $P_{loss} = 1 - \left(1 - \left(P_{kanalfehler}\right)^{r}\right)^{\frac{m}{r}}$ und $P_{kanalfehler}$ repräsentiert eine Fehlerwahrscheinlichkeit innerhalb dieses Kanals. Diese Fehlerwahrscheinlichkeit hängt in der Regel von mehreren Parametern ab, z.B. von der Datenmenge, die über diesen Kanal geht.

Ohne hierauf näher eingehen zu wollen wird angemerkt, dass auch andere Möglichkeiten bestehen, um diese Formel zu evaluieren, z.B. indem andere Fehlermodelle angewendet werden.

So ist beispielsweise möglich ein auf $P_{out}$ (Outage Capacity - Ausfallwahrscheinlichkeit) basierte Modell zu verwenden.

Weiterhin ist es auch möglich Packet-Fehlerwahrscheinlichkeiten oder Restfehlerwahrscheinlichkeiten nach Kodierung als Basis zu verwenden.

Dargestellt sind nur ganzzahlige Werte von r, wobei für alle Nachrichten ein maximale Verzögerung von 1 ms angenommen wurde und die Nachrichtengröße für die einzelnen Nachrichten auf den statistisch unabhängigen Kanälen (hier 32 von 512) entweder zu 64 bit, 128 bit, 256 oder 512 bit angenommen wurde.

Weitere Parameter, die der Berechnung zugrunde lagen, können der nachfolgenden Tabelle entnommen werden

| Zeichen | Erklärung | Wert |
|---|---|---|
| W | zur verfügung stehende Bandbreite | 3.2 MHz |
| n | Anzahl von möglichen Teilkanälen | 512 |
| B | Gesamte genutzte Bandbreite | 200 kHz |
| m | Anzahl verwendeter Teilkanäle | 32 |
| M | verwedeter Square-QAM Typ | {2, 4, 16, 256} |
| $\gamma$ | Durchschnittliches SNR | {10, 20, 30} dB |
|  | Delay spread (rms) | $\approx 1.6\ \mu s$ |
| $l_{out}$ | Message size | {64, 128, 256, 512} bit |
| $D_{out}$ | Maximal zulässige Verzögerung | 1 ms |
| r | Redundanz | {1, 2, 4, 8, 16, 32} |

Ganz rechts ist jeweils der Fall entsprechend Figur 3 dargestellt, während für die jeweilige Kurve ganz links der Fall entsprechend Figur 2 dargestellt ist.

Ohne weiteres lässt sich der Figur 12 entnehmen, dass der Ansatz der Entangled Packet Transmission erhebliche Vorteile mit sich bringt.

So sind bei den gegebenen Randparametern für Nachrichtengrößen von 64 bit auf den einzelnen Teilkanälen bei einem Redundanzfaktor von 8 Ausfallwahrscheinlichkeiten von $10^{-10}$ erreichbar.

Da die Berechnung von r in aller Regel nicht einfach ist, kann dieser Wert numerisch ermittelt werden.

Hierbei kann man sich die Eigenschaft zu Nutze machen, dass die Kurven jeweils ein Minimum aufweisen, so dass als Abbruchkriterium der Wiederanstieg der Ausfallwahrscheinlichkeit sein kann. Dabei kann man z.B bei r=1 beginnen und r jeweils erhöhen, z.B. durch Inkrement oder Bitshift.

Auch können die Ergebnisse in einer Look-up Table z.B. für bestimmte Anzahlen unabhängiger Kanäle und bestimmter SNR-Werte hinterlegt werden.

**Patentansprüche**

1. Verfahren für einen Sender für ein Mehrkanal-Kommunikationssystem zur Versendung Echtzeit-sensitiver Daten D,

   • wobei das Kommunikationssystem n Teilkanäle aufweist,
   • wobei n größer als 1 ist,
   • wobei die Teilkanäle räumlich unterschiedlich sind und/oder die Teilkanäle eine unterschiedliche Frequenz aufweisen,

   aufweisend die Schritte:

   • Erhalten von Information über den Kanalzustand der n Teilkanäle,
   • Erhalten von Information über die Anzahl statistisch unabhängiger Teilkanäle *m*, wobei *m* kleiner oder gleich *n* ist,

   ◦ Erhalten von zur Versendung bestimmten Daten D,
   ◦ Aufteilen der zur Versendung bestimmten Daten D in / Fragmente,
   ◦ Bereitstellung von einer Mehrzahl *o* von Nachrichten zur Versendung an mindestens einen Empfänger, wobei die Anzahl der Nachrichten *o* kleiner oder gleich der Anzahl der statistisch unabhängigen Teilkanäle *m* ist,
   ◦ wobei jede der Nachrichten zumindest ein Fragment aufweist,
   ◦ wobei eine der Nachrichten weiterhin zumindest einen Teil eines Fragmentes aufweist,
   ◦ wobei zumindest ein Fragment in der Mehrzahl o von Nachrichten mindestens *r* mal in unterschiedlichen Nachrichten als Fragment und/oder zumindest als der Teil des Fragmentes enthalten ist, wobei *r* größer *1* ist,

◦ wobei *r* auf Basis der Anzahl der vorhandenen statistisch unabhängigen Teilkanäle *m* und der Größe der zu versendenden Daten bestimmt wird,

• Versenden der Mehrzahl *o* von Nachrichten, wobei jede Nachricht mittels eines anderen der *m* statistisch unabhängigen Teilkanäle versendet wird.

2. Verfahren nach Anspruch 1, wobei das Mehrkanal-Kommunikationssystem ein OFDM basiertes Mehrträger-Kommunikationssystem ist.

3. Verfahren nach einem der vorhergehenden Ansprüche, wobei das Mehrkanal-Kommunikationssystem ein MIMO-System oder ein MISO-System ist.

4. Verfahren nach einem der vorhergehenden Ansprüche, wobei das Mehrkanal-Kommunikationssystem ein LTE-System oder ein WiMax-System oder ein WLAN-System ist.

5. Verfahren nach einem der vorhergehenden Ansprüche, wobei das Mehrkanal-Kommunikationssystem ein IEEE 802.11 oder IEEE 802.15 konformes System, ist

6. Verfahren nach einem der vorhergehenden Ansprüche, wobei die Ausfahlwahrscheinlichkeit kleiner als $10^{-6}$ für Nachrichten ist.

7. Verfahren nach einem der vorhergehenden Ansprüche, wobei die Ausfahlwahrscheinlichkeit kleiner als $10^{-6}$ für Nachrichten bis zu einer Größe von 100 Byte ist.

8. Verfahren nach einem der vorhergehenden Ansprüche, wobei das Verfahren weiterhin den Schritt aufweist: Bestimmung von rdurch Erhalten von Information über eine maximal zulässige Verzögerung der zu versendenden Daten.

9. Verfahren nach einem der vorhergehenden Ansprüche, wobei das Verfahren weiterhin den Schritt aufweist: Bestimmung von rdurch Auswerten einer Look-uptable und/oder Berechnen von *r*.

10. Verfahren nach einem der vorhergehenden Ansprüche, wobei das Mehrkanal-Kommunikationssystem vom Empfänger nach erfolgter Versendung der Nachrichten Informationen über den Kanalzustand der n Teilkanäle und/oder der o ausgewählten Teilkanäle erhält.

11. Verfahren nach einem der vorhergehenden Ansprüche , wobei die einzelnen Nachrichten zusätzlich eine Fehlersicherung bezüglich der Nachricht und/oder einzelner Fragmente in einer Nachricht aufweisen und/oder wobei einzelne Nachrichten verschränkt sind.

12. Verfahren nach einem der vorhergehenden Ansprüche, wobei vor oder beim Versand der zu Versendung bestimmter Daten D, Informationen über die Aufteilung der zur Versendung bestimmten Daten D an den Empfänger weitergleitet werden.

13. Vorrichtung, ausgestaltet zur Ausführung eines der Verfahren nach einem der vorhergehenden Ansprüche.

**Claims**

1. Method for a transmitter for a multi-channel communication system for transmitting real-time-sensitive data D,

• wherein the communication system comprises n sub-channels,
• wherein *n* is greater than 1,
• wherein the sub-channels are spatially distinct and/or the sub-channels comprise a distinct frequency,

comprising the steps:

• receiving of information about the channel state of the $n$ sub-channels,
• receiving of information on the quantity of statistically independent sub-channels $m$, with $m$ being less than or equal to $n$,

  ◦ receiving of data D intended for transmission,
  ◦ distribution of the data $D$ intended for transmission into $l$ fragments,
  ◦ provision of a plurality $o$ of messages for transmission to at least one receiver,
  wherein the quantity of messages $o$ is less than or equal to the quantity of statistically independent sub-channels $m$,
  ◦ wherein each of the messages comprises at least one fragment,
  ◦ wherein one of the messages further comprises at least a portion of a fragment,
  ◦ wherein at least one fragment in the plurality $o$ of messages is contained at least r times in different messages as a fragment and/or at least as the portion of the fragment, with r being greater than 1,
  ◦ wherein $r$ is determined on the basis of the number of statistically independent sub-channels $m$ present and the size of the data to be transmitted.

• transmission of the plurality $o$ of messages, wherein each message is transmitted by means of another of the $m$ statistically independent sub- channels.

2. Method as set forth in claim 1, wherein the multi-channel communication system is an OFDM-based multiple-carrier communication system.

3. Method as set forth in any one of the preceding claims, wherein the multi-channel communication system is a MIMO system or a MISO system.

4. Method as set forth in any one of the preceding claims, wherein the multi-channel communication system is an LTE-System or a WiMax system or a WLAN system.

5. Methods as set forth in any of the preceding claims, whereby the multi-channel communication system is an IEEE 802.11- or IEEE 802.15-compliant system.

6. Method as set forth in any one of the preceding claims, wherein the probability of loss is less than $10^{-6}$ for messages.

7. Method as set forth in any one of the preceding claims, wherein the probability of loss is less than $10^{-6}$ for messages up to a size of 100 bytes.

8. Method as set forth in any one of the preceding claims, further comprising the step of determining r by the receiving of information by means of a maximum permissible delay of the data to be transmitted.

9. Method as set forth in any one of the preceding claims, wherein the method for determining r comprises the evaluation of a lookup table and/or the calculation of one of r.

10. Method as set forth in any one of the preceding claims, wherein the multi-channel communication system, upon completed transmission of the messages, receives information about the channel state of the $n$ sub-channels and/or the $o$ selected sub-channels.

11. Method as set forth in any one of the preceding claims, wherein the individual messages comprise an error control with respect to the message and/or individual fragments in a message and/or wherein individual messages are entangled.

12. Method as set forth in any one of the preceding claims, wherein, before or during the transmission of the data $D$ intended for transmission, information on the distribution of the data $D$ intended for transmission is forwarded to the receiver.

13. Device for a transmitter for a multi-channel communication system for transmitting real-time-sensitive data $D$, wherein the communication system comprises n sub-channels, wherein $n$ is greater than $1$, wherein the sub-channels are spatially distinct and/or the sub-channels comprise a distinct frequency, for executing one of the methods as set forth in any one of the preceding claims., wherein the device comprises:

• Means for receiving of information about the channel state of the *n* sub-channels,
• Means for receiving of information on the quantity of statistically independent sub-channels *m*, with *m* being less than or equal to *n*, wherein the means for receiving are further adapted for

    ∘ receiving of data *D* intended for transmission,
    ∘ distribution of the data *D* intended for transmission into *l* fragments,
    ∘ provisioning of a plurality *o* of messages for transmission to at least one receiver,
    wherein the quantity of messages *o* is less than or equal to the quantity of statistically independent sub-channels *m*,
    ∘ wherein each of the messages comprises at least one fragment,
    ∘ wherein one of the messages further comprises at least a portion of a fragment,
    ∘ wherein at least one fragment in the plurality *o* of messages is contained at least r times in different messages as a fragment and/or at least as the portion of the fragment, with *r* being greater than *1,*
    ∘ wherein *r* is determined on the basis of the number of statistically independent sub-channels *m* present and the size of the data to be transmitted.

• Means for transmission of the plurality *o* of messages, wherein each message is transmitted by means of another of the *m* statistically independent sub- channels.

## Revendications

1. Procédé pour un émetteur pour un système de communication multicanal pour l'envoi de données *D* sensibles au temps réel,

    • le système de communication présentant *n* canaux partiels,
    • *n* étant supérieur à *1*,
    • les canaux partiels étant différents spatialement et/ou les canaux partiels présentant une fréquence différente,

présentant les étapes suivantes :

    • obtention d'informations sur l'état de canal des *n* canaux partiels,
    • obtention d'informations sur le nombre *m* de canaux partiels statistiquement indépendants, *m* étant inférieur ou égal à *n*,

        ∘ obtention de données *D* destinées à être envoyées,
        ∘ répartition des données *D* destinées à être envoyées en /fragments,
        ∘ mise à disposition d'une pluralité *o* de messages à envoyer à au moins un destinataire, le nombre *o* de messages étant inférieur ou égal au nombre *m* de canaux partiels statistiquement indépendants,
        ∘ chacun des messages présentant au moins un fragment,
        ∘ un des messages présentant en outre au moins une partie d'un fragment,
        ∘ au moins un fragment dans la pluralité *o* de messages étant contenu au moins *r* fois dans différents messages en tant que fragment et/ou étant contenu au moins en tant que la partie du fragment, *r* étant supérieur à *1,*
        ∘ *r* étant déterminé sur la base du nombre *m* de canaux partiels statistiquement indépendants présents et de la taille des données à envoyer,

    • envoi de la pluralité *o* de messages, chaque message étant envoyé à l'aide d'un autre des *m* canaux partiels statistiquement indépendants.

2. Procédé selon la revendication 1, dans lequel le système de communication multicanal est un système de communication à porteuses multiples basé sur OFDM.

3. Procédé selon l'une des revendications précédentes, dans lequel le système de communication multicanal est un système MIMO ou un système MISO.

4. Procédé selon l'une des revendications précédentes, dans lequel le système de communication multicanal est un système LTE ou un système WiMax ou un système WLAN.

5. Procédé selon l'une des revendications précédentes, dans lequel le système de communication multicanal est un système conforme à la norme IEEE 802.11 ou IEEE 802.15.

6. Procédé selon l'une des revendications précédentes, dans lequel la probabilité d'une défaillance pour des messages est inférieure à $10^{-6}$.

7. Procédé selon l'une des revendications précédentes, dans lequel la probabilité d'une défaillance est inférieure à $10^{-6}$ pour des messages d'une taille jusqu'à 100 octets.

8. Procédé selon l'une des revendications précédentes, dans lequel le procédé présente en outre l'étape suivante : détermination de $r$ en obtenant de l'information sur un retard maximal autorisé des données à envoyer.

9. Procédé selon l'une des revendications précédentes, dans lequel le procédé présente en outre l'étape suivante : détermination de $r$ par évaluation d'une table de recherche et/ou par calcul de $r$.

10. Procédé selon l'une des revendications précédentes, dans lequel le système de communication multicanal du destinataire, une fois l'envoi des messages effectué, obtient des informations sur l'état de canal des $n$ canaux partiels et/ou des $o$ canaux partiels sélectionnés.

11. Procédé selon l'une des revendications précédentes, dans lequel les messages individuels présentent additionnellement une protection contre les erreurs concernant le message et/ou des fragments individuels dans un message, et/ou dans lequel des messages individuels sont imbriqués.

12. Procédé selon l'une des revendications précédentes, dans lequel, avant ou pendant l'envoi des données D destinées à l'envoi, des informations concernant la répartition des données D destinées à l'envoi sont retransmises au destinataire.

13. Dispositif équipé pour la mise en oeuvre de l'un des procédés selon l'une des revendications précédentes.

| a | b | c | d | e | f | g | h |
|---|---|---|---|---|---|---|---|

Figur 1

| D | | D | | D | | D | | D | | D | | D | | D | |
|---|---|---|---|---|---|---|---|---|---|---|---|---|---|---|

Figur 2

| a | | b | | c | | d | | e | | f | | g | | h | |
|---|---|---|---|---|---|---|---|---|---|---|---|---|---|---|

Figur 3

| ab | | cd | | ef | | gh | | ab | | cd | | ef | | gh | |
|----|---|----|---|----|---|----|---|----|---|----|---|----|---|----|

Figur 4

| ab cd | | ef gh | | ab cd | | ef gh | | ab cd | | ef gh | | ab cd | | ef gh | |
|---|---|---|---|---|---|---|---|---|---|---|---|---|---|---|

Figur 5

| | ab | | cd | | ef | | gh | | ab | | cd | | ef | | gh |
|---|---|---|---|---|---|---|---|---|---|---|---|---|---|---|---|

Figur 6

| | ab cd | | ef gh | | ab cd | | ef gh | | ab cd | | ef gh | | ab cd | | ef gh |
|---|---|---|---|---|---|---|---|---|---|---|---|---|---|---|---|

Figur 7

| | ab | | cd | | ef | | gh | | ac | | bd | | eg | | fh |
|---|---|---|---|---|---|---|---|---|---|---|---|---|---|---|---|

Figur 8

| a | | b a' | |
|---|---|---|---|

Figur 9

| a crc b crc |
|---|

Figur 10

| a b crc |
|---|

Figur 11

Figur 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2006008031 A1

- US 4713817 A

**In der Beschreibung aufgeführte Nicht-Patentliteratur**

- Redundant data transmission in control/estimation over wireless networks. **MESQUITA et al.** American Control Conference. IEEE, 10. Juni 2009, 3378-3383

- Antenna redundancy for increasing transmission reliability in wireless industrial LANs. **WILLIG.** Emerging Technologies and Factory Automation. IEEE, 16. September 2003, vol. 1, 7-14